(19) Europäisches Patentamt / European Patent Office / Office européen des brevets

(11) **EP 3 421 201 B1**

(12) **EUROPEAN PATENT SPECIFICATION**

(45) Date of publication and mention of the grant of the patent:
**17.06.2020 Bulletin 2020/25**

(51) Int Cl.:
*B28B 1/00* *(2006.01)*     *C04B 28/02* *(2006.01)*
*B33Y 30/00* *(2015.01)*     *B29C 64/10* *(2017.01)*

(21) Application number: **18180993.0**

(22) Date of filing: **29.06.2018**

(54) **CEMENTITIOUS MIXTURE FOR A 3D PRINTER AND USE THEREOF**

ZEMENTMISCHUNG FÜR EINEN 3-DRUCKER UND VERWENDUNG DAVON

MÉLANGE CIMENTAIRE POUR IMPRIMANTE 3D ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 IT 201700073768**

(43) Date of publication of application:
**02.01.2019 Bulletin 2019/01**

(73) Proprietor: **ITALCEMENTI S.p.A.**
**24126 Bergamo (IT)**

(72) Inventors:
• **RAMPINELLI, Flavio**
  **24059 Urgnano (BG) (IT)**
• **ROSSINO, Chiara**
  **24068 Seriate (BG) (IT)**
• **LEZZI, Gianluca**
  **24125 Bergamo (BG) (IT)**

(74) Representative: **De Gregori, Antonella et al**
**Studio Legale Bird & Bird**
**Via Borgogna, 8**
**20122 Milano (IT)**

(56) References cited:
• **LE T T ET AL: "Mix design and fresh properties for high-performance printing concrete", MATERIALS AND STRUCTURES, KLUWER ACADEMIC PUBLISHERS, DO, vol. 45, no. 8, 19 January 2012 (2012-01-19), pages 1221-1232, XP035082641, ISSN: 1871-6873, DOI: 10.1617/S11527-012-9828-Z**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a cementitious mixture for a 3D printer and its relative use, more specifically for the production of finished products having a complex geometry using a 3D printing apparatus.

The present invention falls within the field of cement mixtures or compositions to be used, by means of 3D printing technologies, for the production of three-dimensional products, in particular by means of 3D extrusion printing.

Mechatronics has reached a high level of pervasion of various industrial sectors, where robotic production has become a consolidated process for several years. The additive technology (or Additive Manufacturing, AM) is becoming increasingly important in the field of rapid prototyping. There are examples of the use of this technology for the production of complex parts, especially with respect to objects for which production in a large number of copies is not necessary, not only for example for dental implants or jewels, but also for the production of chrome-cobalt fuel nozzles, printed by General Electric for the new LEAP jet engines of the Airbus A320 group [1].

This technology is particularly advantageous when the products can be obtained directly from the digital model, with an absolutely reduced use of additional supporting material that will inevitably be wasted after the object has been finished.

Various techniques in the field of additive technologies allow the use of different materials, such as thermoplastic resins that can melt/harden in a narrow range of temperatures, photo-crosslinkable resins that are cured by means of a laser beam or metal powders that melt using a laser beam and harden immediately after the passage of the laser.

The International Technical Committee ASTM F42 on Additive Technologies defines additive technology as the *"process of joining materials to create objects starting from 3D model data, usually layer upon layer, as opposed to subtractive production methodologies"* (this definition is the subject of ISO harmonization from the ISO standard 17296 -1) [2].

Cement-based materials have also been introduced into the additive technology sector. These materials behave completely differently from the other materials indicated above and normally used in this type of technology. The characteristics required for a mix or cement composition to be used as material for AM must clearly take into consideration the typicality of the printing process.

Additive technologies in the cement industry can be used in various fields, including architecture, construction, art and design. These technologies have recently attracted a growing interest in the construction industry, mainly deriving from the possibility of offering more freedom in the design of complex shapes, with potential aesthetic and functional advantages, reducing production times and costs [3]. Before printing any object, however, a 3D model must be produced, using an appropriate software. The 3D model is divided into a certain number of layers which then correspond to the different deposition layers provided by the AM process. These steps require specific skills, not common in industrial construction and an error in the implementation of the 3D model inevitably leads to an error in production.

Among the existing techniques that apply the additive technology, 3D extrusion printing seems to be the one with the greatest potential for development in the construction field. This technique generally provides at least one print head to which a nozzle, generally pressurized, is mounted. The print head is fed with a cement mixture and driven by motors in precise points in space, following a 3D model of the object to be printed.

The speed at which the material is extruded through the nozzle and the speed at which the print head moves in space are some of the design parameters that determine the final resolution of the print. The nozzle is piloted to trace the paths in space that allow the object digitally represented to be reproduced. As the material exits from the nozzle, it is placed on the surface of the object being constructed and the construction itself of the object then proceeds in the form of a succession of superimposed layers, in a vertical direction, until the whole object has been constructed.

Conceptually, the whole printing process may be divided into five steps:

- Creation of the model of the 3D CAD objects;
- Sectioning the model into layers;
- Conversion of the map of each layer into instructions for the machine;
- Creation of the object by depositing successive layers of cementitious material;
- Recovery of the object.

The object, designed as a 3D CAD model, is converted into an STL format file and cut into layers having the desired thickness. The printing path of each layer is then generated to create a G-Code printing file. The preparation of the cementitious material involves mixing and placing the material in a suitable container. Once the fresh material has been placed in the container, it can be transported through a pump-tubing-nozzle system to print cementitious filaments, which can thus construct, layer by layer, the desired object. This procedure has the advantage of allowing the deposition of material only in the spaces provided by the 3D model, unlike traditional building technologies, and the possibility of creating multi-material objects. The disadvantage of this method, on the other hand, could be the need for identifying a suitable supporting technique for creating complex objects.

The 3D printing of cementitious materials, using the extrusion technique, appeared for the first time in 2007, thanks to the research team of the University of Loughborough (United Kingdom) [4]. This research group presented for the first time the potential for using cementitious materials in AM, focusing attention on some critical aspects, such as the production of large-sized objects, the complexity of the formulations, the need for identifying the correct rheological and mechanical properties of the same during printing and maturation, the need for ensuring sufficient adhesion of the intermediate layers. The result of these studies led to the creation of a 3D printer for cementitious materials, which extrudes a high-performance mixture under the control of the computer. This 3D printer makes it possible to produce objects such as complex structural components, curvilinear cladding panels and particular architectural elements.

The main characteristics for assessing whether a cementitious material is suitable as a 3D extrusion printing material, now widely identified and defined, are the following [5]:

- Extrudability: i.e. the characteristic that allows the material to flow easily through the nozzle. This characteristic is controlled by the correct balance between pumping power, extrusion capacity and nozzle geometry;
- Processability time of the material (open time): that is, the time that passes from the preparation of the material to when it is too viscous to be correctly extruded in the 3D printing process;
- Buildability: i.e. the capacity of the fresh material to support the weight of the upper layers, which is a property that depends on the rheology of the material, but also on the adhesion between the layers.

The right balance must be found for obtaining the right formulation as these characteristics are antithetical. For this reason, it is essential to identify suitable additives, in addition to the correct dispersion of the aggregates in the cement matrix, in order to optimize the formulation.

Other significant examples of AM extrusion applied to the cement industry are as follows:

- University of Southern California: this has developed a layered manufacturing technology called Contour Crafting (CC), which uses computer control for creating smooth and precise surfaces both planar and of any shape [6]. Although the technique is based on the extrusion of AM materials, it is a hybrid method that combines an extrusion process for the formation of the surfaces of the object and a filling process (pouring or injection) for constructing the core of the object, also using standard industrial materials [7]. The extrusion process only constructs the outer edges (circles) of each level of the object. After the complete extrusion of each closed section of a certain layer, if necessary, the filling material can be poured to fill the area defined by the extruded edges. The application of CC in the construction of buildings is performed by a trestle structure that carries the nozzle and moves it on two parallel lanes installed on the construction site. [8];
- WinSun: this is a company that uses large 3D printers that extrude a mixture of fast-drying cement and recycled materials [9]. The technology is based on the AM extrusion technique and uses a CAD design as model. A computer controls a mechanical extruder arm for depositing the cementitious material, which is treated with hardeners so that each layer is solid enough for supporting the subsequent layer, creating one wall at a time. The pieces are subsequently joined to each other, directly in the construction site;
- Eindhoven University of Technology: this research group has studied a new model of 3D concrete printing technology, which, similarly to other machines (such as the Contour Crafting printer), has a similar appearance to a crane. This is therefore a non-portable machine, with a swivel printer head, with mixing of concrete, a pump and a printing volume of $11x5x4 \text{ m}^3$.

Over the years, specific cement formulations have therefore been developed for being printed by suitable 3D printers and some of these have also been patented. With respect to cement-based formulations, the following documents can be cited: CN104310918, CN201510838044A, WO2017/050421A1, US2014/0252672A1. As far as the extrusion technology applied to this sector is concerned, the most significant patents/patent applications are the result of the activities of the research centers mentioned above, and, by way of example, US7641461B2, US7837378B2, US7878789B2 and US 7753642B2 can be cited.

Le, T.T. et al. in "Mix design and fresh properties for high-performance printing concrete", Materials and Structures, (2012) 45: 1221-1232 (XP35082641) are disclosing a concrete for prototype printing [5].

Although specific cement formulations/mixtures have been developed for being printed by 3D printers, the need is particularly felt for identifying cement compositions that solve problems relating to the following specificities:

- the cementitious mixture to be printed in 3D by extrusion must be extrudable and buildable in the fresh state;
- the 3D printer for cement mixtures must have specific characteristics that are not found in the printers currently on the market.

In order to solve the technical problems considered above, the objectives of the present invention are the following:

- identifying specific cementitious mixtures, optimized in terms of simultaneous extrudability and buildability in the fresh state, in order to accurately reproduce a 3D model;
- re-designing and printing, with a plastic filament, some parts of a 3D printer to adapt it to processing/printing the desired cementitious mixtures.

The object of the present invention therefore relates to a cementitious mixture for a 3D printer which comprises a) cement or hydraulic binder, b) latent hydraulic addition, c) filler, d) aggregates, e) additives, f) water, said mixture being characterized in that component c) i.e. the filler, selected from calcareous, silica or silico-calcareous fillers, preferably calcareous fillers, alone or in a mixture, has a particle size which is such that 90% by weight of the filler passes through an 0.063 mm sieve;
component d) is present in a quantity ranging from 10% to 80% by weight, preferably from 25% to 50% by weight, with respect to the total weight of the cementitious mixture, and is composed of calcareous, silica or silico-calcareous aggregates, alone or mixed with each other, having a particle size with a maximum diameter of less than 1 mm, said component d) being composed of one or more fractions having a particle size greater than 0.2 mm and/or a fraction having a particle size with a diameter less than or equal to 0.2 mm and such that less than 2% by weight passes through an 0.063 mm sieve;
component e) comprises superfluidifying additives, rheology modifiers, shrinkage reducers and mixtures thereof,
said cementitious mixture being characterized by a viscosity value ranging from 4,000 Pa·s to 35,000 Pa·s, measured at a shear rate of 0.01 s$^{-1}$ and at the temperature of 20°C. The viscosity is measured by means of a rheological method, with a rheometer having a controlled shear rate model Haake Rotovisco RV1 with coaxial cylinders, using a cylinder and a vane (with 4 blades), with a diameter of 41 and 22 mm respectively. The materials of the present invention were characterized using a step method by varying the shear rate from a minimum value of 0.01 s$^{-1}$ to a maximum value of 10 s$^{-1}$ and at the temperature of 20°C. The total duration of the test is 30 minutes during which the punctual data are collected at the desired rates.

The cementitious mixture for a 3D printer according to the invention preferably comprises

a) from 10% to 70% by weight of hydraulic binder or cement, preferably selected from Portland cement, sulfoaluminate cement and/or aluminous cement and/or quick-setting natural cement, alone or mixed with each other;
b) from 0.0% to 25% by weight, preferably from 0.5% to 20% by weight, of a natural or artificial hydraulic addition, preferably granulated blast-furnace slag, having a specific surface ranging from 3,500 cm$^2$/g to 6,500 cm$^2$/g, preferably from 4,000 cm$^2$/g to 5,000 cm$^2$/g, measured with the Blaine method according to EN 196-6:2010;
c) from 10% to 50% by weight, preferably from 15% to 40% by weight, of a filler, selected from calcareous, silica or silico-calcareous fillers, preferably alone or mixed with each other, having a particle size which is such that 90% by weight of the filler passes through an 0.063 mm sieve;
d) from 10% to 80% by weight, preferably from 25% to 50% by weight, of calcareous, silica or silico-calcareous aggregates, alone or mixed with each other, having a particle size with a maximum diameter lower than 1 mm, said component d) being composed of one or more fractions having a particle size greater than 0.2 mm and/or a fraction having a particle size with a diameter less than or equal to 0.2 mm and such that less than 2% by weight passes through an 0.063 mm sieve;
e) from 0.01% to 1.5% by weight, preferably from 0.2% to 1.0% by weight, of a superfluidifying additive selected from acrylic-based superfluidifying polycarboxylates, lignosulfonates, naphthalene sulfonates, melamine or vinyl compounds, more preferably polycarboxylic ethers; from 0.01% to 5.0% by weight, preferably from 0.10% to 0.50% by weight, of a rheology modifying additive, preferably cellulose, more preferably hydroxymethylethylcellulose; from 0.01% to 2.0% by weight, preferably from 0.1% to 1.0% by weight, of modified starch; from 0.0% to 1.0% by weight, preferably from 0.3% to 0.6% by weight, of a shrinkage reducer;

wherein the weight ratio binder/aggregate ranges from 0.5 to 2.0, preferably from 0.62 to 1.36, and said mixture has a viscosity value ranging from 4,000 Pa·s to 35,000 Pa·s, measured at a shear rate of 0.01 s$^{-1}$ and at the temperature of 20°C.

The percentages indicated above are weight percentages with respect to the total weight of the cement mixture in powder form, i.e. excluding water.

In the cementitious mixture according to the present invention, the weight ratio water/binder ranges from 0.25 to 0.8, preferably from 0.4 to 0.6.

The cementitious mixture according to the present invention is surprisingly characterized by an optimum balance of the properties of interest: in fact, it guarantees at the same time a good buildability, extrudability and processability time, thus proving to be particularly suitable for deposition by 3D extrusion printing.

This optimization has been surprisingly obtained thanks to the specific combination of suitable additives, a precise dispersion of the aggregates with specific dimensions in the binder matrix and a specific viscosity range.

It should in fact be remembered that from a rheological point of view, the relevant parameters go in exactly opposite directions: the fresh material must have a viscosity that ensures its correct extrusion, but at the same time allowing it to sustain itself during the printing process, in order to guarantee the realization of the 3D object designed.

Consequently, in order to coexist, the extrudability and buildability property require a correct compromise in terms of rheological properties, as they have an opposite effect on these two parameters.

The buildability concept should not be confused with green strength, defined as the strength of the uncured cementitious material in order to maintain its original form until the material starts to set and the hydration products provide sufficient mechanical strength [10].

The cementitious mixture described must be able, once deposited, to self-sustain itself (buildability concept) during the whole printing process layer by layer. As already indicated, this property mainly depends on the rheological behaviour of the material and at the same time, on the adhesion between the layers.

The cementitious mixture for 3D printing which is even more preferred according to the present invention consists of:

a) from 10% to 70% by weight of hydraulic binder or cement, selected from CEM I 52.5 R or CEM I 52.5 N, preferably CEM I 52.5 R;
b) from 0.5% to 20% by weight of granulated blast-furnace slag, having a specific surface ranging from 4,000 $cm^2$/g to 5,000 $cm^2$/g, measured with the Blaine method according to EN 196-6:2010;
c) from 15% to 40% by weight of a calcareous filler, alone or in a mixture, having a particle size which is such that 90% by weight of the filler passes through an 0.063 mm sieve;
d) from 25% to 50% by weight of calcareous, silica or silico-calcareous aggregates, alone or in a mixture, having a particle size with a maximum diameter of less than 1 mm, said component d) being composed of one or more fractions having a particle size greater than 0.2 mm and/or a fraction having a particle size with a diameter less than or equal to 0.2 mm and such that less than 2% by weight passes through an 0.063 mm sieve;
e) from 0.2% to 1.0% by weight of a superfluidifying additive based on polycarboxylic ether; from 0.10% to 0.50% by weight of a rheology modifying additive which is hydroxymethylethylcellulose; from 0.1% to 1.0% by weight of modified starch; from 0.3% to 0.6% by weight of a shrinkage reducer;

wherein the weight ratio binder/aggregate ranges from 0.62 to 1.36 and said cementitious mixture has a viscosity value ranging from 4,000 Pa·s to 35,000 Pa·s, measured at a shear rate of 0.01 s$^{-1}$ and at the temperature of 20°C.

In the present description, the term "cement or hydraulic binder" refers to a material in powder form which, when mixed with water, forms a paste that hardens by hydration and which, after hardening, maintains its resistance and stability even under water. The hydraulic binder or cement of the cementitious mixture according to the present invention is preferably selected from Portland cement, sulfoaluminate cement and/or aluminous cement and/or quick-setting natural cement. These cements can also be used in a mixture with each other. The Portland cement according to the present invention is Portland cement I 42.5 or 52.5 of resistance, with initial ordinary (N) or high (R) resistance class, according to the standard EN 197-1: 2011. The preferred cement is CEM I 52.5 R or CEM I 52.5 N, even more preferred CEM I 52.5R.

In the present description, the term *"latent hydraulic addition"* refers to a natural or artificial hydraulic addition, preferably granulated blast-furnace slag (GGBS: "ground granulated slag"), having a specific surface ranging from 3,500 $cm^2$/g to 6,500 $cm^2$/g, preferably from 4,000 $cm^2$/g to 5,000 $cm^2$/g, determined according to the Blaine method according to EN 196-6: 2010. The latent hydraulic addition is added to the formulation for improving the processability of the material. When present, this type of addition forms part of the binder, the binder in the binder/aggregate and water/binder ratio is therefore given by the sum of the cement or hydraulic binder and the latent hydraulic addition (or GGBS).

In the present description, the term *"filler"* is defined in accordance with the standard UNI EN 12620-1: 2008 as aggregate, characterized by having a particle size which is such that about 90% of the filler passes through a sieve of 0.063 mm. It can be added to building materials to confer various properties. The filler according to the present invention is selected from calcareous, siliceous or silico-calcareous fillers, preferably calcareous, alone or in a mixture.

In the present description, the term *"aggregate"* refers to calcareous, siliceous or silico-calcareous aggregates which are known and commonly available products. Aggregates for use in cement compositions are defined in the standard UNI EN 206: 2014 as a natural, artificial, recovered or recycled granular mineral constituent suitable for use in concrete.

Aggregates are normally used for obtaining greater resistance, a lower porosity and less efflorescence. In the present invention, the aggregates preferably have a particle size with a maximum diameter of less than 1 mm.

The aggregates in the cement mixture according to the present invention also comprise a fraction having a particle size with a diameter ranging from 0.00 mm to 0.20 mm. This particle-size range can be deduced from the technical data sheet of this fraction, which is commercially referred to as "Impalpable". This fraction therefore has a particle size with a diameter lower than or equal to 0.2 mm and which is such that less than 2% by weight passes through a 0.063 mm sieve.

In the present description, the term *"additives"* refers to various types of additives which, in the cementitious mixture according to the present invention, allow a cementitious mixture for optimized 3D printing to be obtained. They guarantee, in fact, in combination with the specific dispersion and size of the aggregates, a synergistic effect of good construction speed, extrudability, processability time, processability and development of the mechanical properties. The superfluidifier is an additive that is added to improve the processability of the product without increasing the water content. Among these, an acrylic-based polycarboxylate superfluidifier is preferred, dosed according to the temperature of the mixture, the ambient temperature and the degree of fluidity required in the formulation. Other possible superfluidifiers are ligninsulfonates, naphthalene-sulfonates, melamines or vinyl compounds, the most preferred are polycarboxylic ethers.

A further additive in the cementitious mixture according to the present invention is the "rheology modifying agent", i.e. a substance which, if present in a cement composition, is capable of modifying the rheological properties in the fresh state and adhesion to the substrate. This additive is added to this type of formulation to increase the viscosity of the product in order to avoid segregation. Cellulose derivatives such as cellulose, more preferably hydroxymethyl ethyl cellulose, hydroxyethyl cellulose, hydroxymethyl propyl cellulose, carboxymethyl cellulose are preferred rheology modifiers according to the present invention.

The cementitious mixture according to the present invention can also include, as additives, starch derivatives used for influencing the consistency of the mortars and improving the processability of the formulation. These compounds are chemical starches modified with ether groups which are applied in the building industry, in particular in gypsum, cement and lime plasters.

A further preferred additive to be added is the shrinkage reducing agent, also known as SRA, which includes a wide variety of glycols and polyols and is responsible for reducing shrinkage deformation throughout the whole operating life of the cured manufactured article.

An object of the present invention also relates to the use of the cement mixtures according to the present invention as extrusion material in a 3D printer.

The present invention disclosed - but does not claim - a 3D printing process comprising the following steps:

- preparation of the cementitious mixture according to the present invention;
- feeding the cementitious mixture to a 3D printing apparatus;
- extrusion of the cementitious mixture from the 3D printer by means of a single-screw extruder;
- printing the 3D model by the deposition of consecutive layers of cementitious mixture;

the ratio between the maximum diameter of the aggregates of the cementitious mixture and the distance between screw and internal wall of the extruder ranging from 0.02 to 0.8.

The present invention disclosed - but does not claim - an apparatus suitable for implementing the printing process of a 3D object fed with the cementitious mixture according to the present invention, said apparatus comprising a cylindrical gas-pressurized supply tank, a screw extruder, a flexible pipe which connects the tank to the extruder and a pumping system, wherein the extruder is a single-screw extruder, provided with a circular nozzle, the ratio between the maximum diameter of the aggregates of the cementitious composition and the distance between screw and internal wall of the extruder ranging from 0.02 to 0.8.

More specifically, the above apparatus is part of a 3D printer, with which an object, previously designed by specific software, is created, using the cementitious mixture according to the present invention. Said apparatus comprises a cylindrical gas-pressurized supply tank, a screw extruder and a flexible pipe that connects the tank to the extruder. The pumping system can be any pumping system known in the art, but in the present apparatus, a piston is preferably used, suitable for pushing the cementitious mixture contained inside the supply tank. The cementitious mixture is thus fed, through a flexible pipe, to the single-screw extruder mounted on the print head. The extruder is provided with a circular nozzle.

More specifically, in the 3D printing process the cementitious mixture is fed by means of a flexible pipe to an extruder of a 3D printer which allows an extruded product positioned in the printing area of the same, to be created.

This extruder is characterized by a screw having a height ranging from 35 to 140 mm, preferably from 40 to 80 mm, a pitch ranging from 7 to 30 mm, preferably from 8 to 15 mm, and a helix angle ranging from 12° to 43°, preferably from 14° to 26°, a nozzle with a diameter ranging from 2 to 30 mm, preferably from 2.5 to 7 mm, and a height ranging from 5 to 50 mm, preferably from 10 to 40 mm. The above-mentioned extruder allows cementitious mixtures according to the present invention to be deposited, and specifically mixtures which comprise aggregates having a particle size with a maximum diameter of less than 1 mm and a viscosity value ranging from 4,000 Pa•s to 35,000 Pa•s, measured at a shear rate of 0.01 s$^{-1}$.

Furthermore, the ratio between the maximum diameter of the aggregates and the distance between the screw and the inner wall of the extruder (to be understood as the difference between the internal diameter of the extrusion chamber and the diameter of the screw (flight clearance)) must range from 0.02 to 0.8.

This ratio discriminates the capacity of extruding aggregates with a certain value of the maximum diameter inside the extruder itself.

A further object of the present invention relates to a finished product with a complex geometry obtained by means of 3D printing with an apparatus fed with the cementitious mixture according to the present invention.

In the enclosed figures:

- figure 1 is a schematic representation of an extruder for the extrusion of the cementitious mixture;
- figure 2 is a representation of the supporting structure for the printing of the extruder screw;
- figure 3 is a photographic reproduction of the pressurized tank, empty and filled with cementitious mixture according to the present invention;
- figure 4 is a photographic reproduction of the finished product with a complex geometry obtained according to Example 1;
- figure 5 is a photographic reproduction of the main components forming the apparatus for effecting the 3D printing process.

As previously indicated, the main components of the apparatus for carrying out the 3D printing process, to which the cementitious mixture according to the present invention is fed to be subsequently extruded and deposited, are the following:

1) cylindrical gas-pressurized supply tank;
2) flexible pipe that connects the tank to the extruder;
3) screw extruder;
4) circular outlet nozzle.

The extrusion device can be mounted on any type of machine or robot that can receive it, so as to combine the extrusion process with the specific advantages related to the kinematics of the machine/robot.

More specifically:

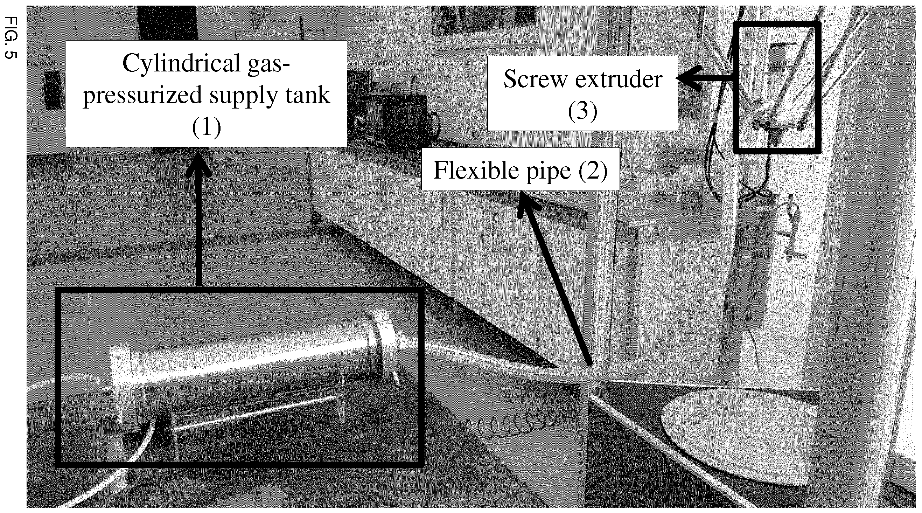

figure 5 shows the cylindrical gas-pressurized supply tank (1) which contains a piston that pushes the fluid i.e. the cement mixture. The pressure is supplied by pressurized air, directly connected to the tank and regulated by a pressure gauge.

The flexible plastic pipe (2) which connects the pump-tank system (1) to the extruder (3) is characterized by a circular section, with an internal diameter of 20 mm and a length ranging from 1.5 to 3 m.

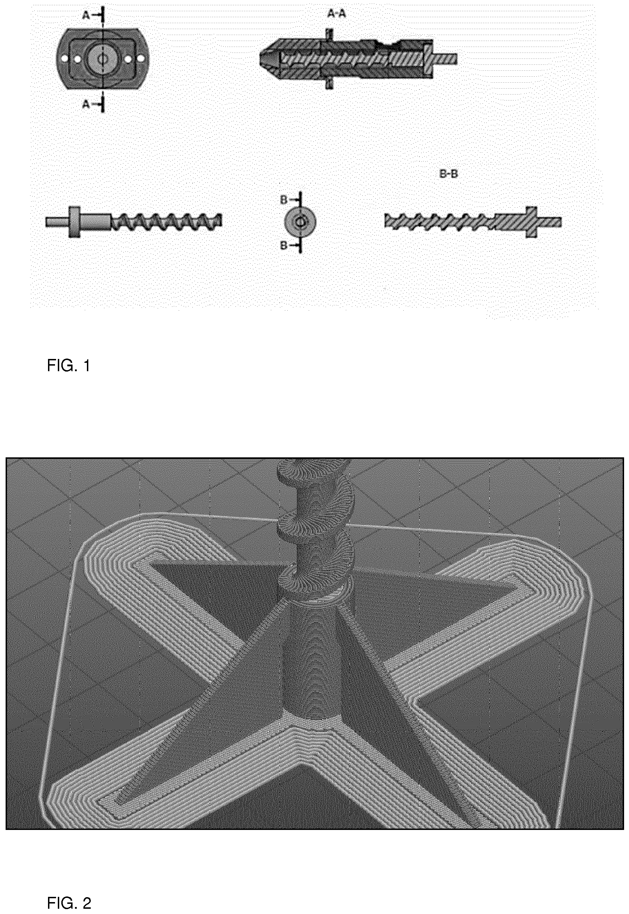

The single-screw extruder (3) has been optimized for application with the cementitious mixture according to the present invention and is schematically shown in figure 1.

All the parts of the extruder are made of ABS (acrylonitrile-butadiene-styrene) and are printed in turn by means of a 3D printer capable of processing polymeric materials. The only exception to the plastic parts of the extruder is the metal shaft.

The screw has been printed with a hole in which the shaft has been glued and a bearing is mounted on the screw in order to limit friction. The screw is printed in a vertical position to guarantee adherence to the surface of the printing area during the process; supporting structures (in the form of a triangle) (shown in figure 2) are provided so that the screw having the desired geometry can be printed correctly. The rotation rates supported by the screw range from 90 to 180 revs/min.

The diameter of the nozzle is equal to 4.8 mm and the nozzle is designed as a cone-shaped piece in order to reduce the friction of the cement mixture.

The printing parameters can be controlled with various types of software. This software allows the designed object to be divided into sections dictated by the print resolution to be obtained. In particular, the object to be printed is designed by creating a 3D digital model using a CAD application, and is then divided into layers by means of the above-mentioned software, thus providing the machine with instructions and establishing the path (layer by layer) that the nozzle must follow for constructing the object. The software for dividing the object into layers has been created, in general, for managing materials such as plastic or metal and therefore does not allow the direct control of some important parameters, such as the screw speed.

In order to control the screw speed (and therefore the flow-rate of the extruded material), an approach is followed similar to the extrusion control model of plastic material. The first step is to calculate the flow-rate necessary for printing the object. It is the product of the height of the extruded layer, the diameter of the nozzle and the speed of the print head. Consequently, once the flow-rate value is known, the rotation rate of the screw can be calculated, using the following equations of a single-screw extruder model:

$$\begin{cases} Q = A * N + B * \dfrac{\Delta P}{\mu} \\ \\ Q = k * \dfrac{\Delta P}{\mu} \end{cases}$$

wherein N is the rotation speed of the screw in rpm, $\Delta P$ is the increase in pressure inside the extrusion chamber, $\mu$ is the viscosity of the cementitious mixture (assuming that, under conditions of high flow stress, it behaves as a Newtonian fluid), A and B are functions of the extruder geometry and k is a function of the geometry of the nozzle.

The screw is driven by the same motor that pushes the polymeric thread into the extruder for polymeric materials. The rotation of the motor must ensure a sufficient feed-rate of the polymer to the extruder and its speed therefore depends on the diameter of the thread. By supplying the software with the correct value of this diameter, it is possible to define the speed of the screw-extruder motor.

In the case of the cementitious mixtures object of the present invention, it is necessary to impose on the software a much higher value of the thread diameter than that of a plastic thread, in order to correctly use the nozzle with the desired diameter and to obtain the right flow-rate necessary for the printing of this type of material. This expedient is necessary for imposing the correct rotation speed (rpm) on the extruder screw. The diameter of the thread can also be modified for increasing the flow-rate and therefore the printing speed.

The examples provided hereunder are aimed at demonstrating the efficiency or non-efficiency of cementitious compositions according to the present invention, when processed by means of a 3D printing apparatus.

Example 1 (not according to the invention)

A formulation of cementitious mixture having the composition indicated in the following Table 1, was prepared using a Hobart mixer, according to the following procedure:

- the solid components were mixed for 1 minute at a rate of 140 revs/min;
- water was then added for 1 minute at a rate of 140 revs/min;
- all the components were then further mixed for 2 minutes at a rate of 285 revs/min and subsequently for 1 minute at a rate of 322 revs/min;
- the mixing was interrupted for 45 seconds to collect any possible material remaining on the walls of the container;
- all of the components were then mixed for 1 minute at a rate of 322 revs/min and subsequently for 1 minute at a rate of 240 revs/min.

Table 1: Formulation extruded according to Example 1.

| Component | Composition (weight %) |
|---|---|
| Cement I 52.5 R | 40.0% |
| Calcareous filler | 20.0% |
| Silico-calcareous sand (0.00-0.200 mm) | 27.8% |
| Silico-calcareous sand (0.200-0.350 mm) | 11.0% |
| Superfluidifying agent | 0.6% |
| Rheology modifier 1 | 0.3% |
| Rheology modifier 2 | 0.3% |
| Water/binder | 0.56 |
| Binder/aggregate | 1.03 |

The cement is a cement of the type I 52.5 R from the Rezzato plant. The calcareous filler is a high-purity filler, having a particle size which is such that 90% by weight of the filler passes through an 0.063 mm sieve, marketed by Omya Spa under the trade-name of Omyacarb 2-AV. The silico-calcareous aggregates were added in two fractions, a first fraction with a particle-size distribution ranging from 0.00 to 0.200 mm, with a particle size which is such that less than 2% by weight passes through an 0.063 mm sieve, and a second fraction with a particle-size distribution ranging from 0.200 to 0.35 mm.

The superfluidifier is based on polycarboxylic ether, called Melflux 1641 F, and marketed by BASF. The rheology modifier 1 is a hydroxymethylethyl cellulose called "Tylose MH 60004 P6" marketed by ShinEtsu. The rheology modifier 2 is a starch modified with ether groups, marketed under the name of Aqualon ST2000 by Ashland. These three additives are all in solid form.

The water/binder ratio is equal to 0.56, whereas the binder/aggregate ratio is equal to 1.03.

At the end of the mixing, the cementitious mixture having the composition indicated in Table 1 was characterized by means of a Haake RotoVisco RV1 rheometer, with coaxial cylinders. The test allowed the viscosity of the material to be characterized within a share rate range of 0.01 to 10 $s^{-1}$, using a step method. Each step was maintained for 30 seconds and the total duration of the test was 8 minutes. The viscosity of the cementitious mixture measured at a shear stress value of 0.01 $s^{-1}$ is equal to 20,000 Pa•s.

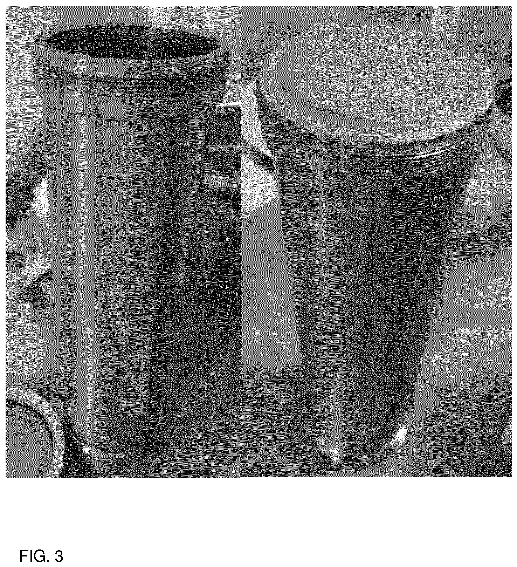

At the end of the mixing, the mortar was inserted in the cylindrical gas-pressurized supply tank (as shown in Figure 3) with the help of a spatula and arranged in order to completely fill the container, reducing the air entrapped in the material as much as possible. The cylindrical gas-pressurized supply tank was thus prepared for being connected to the extruder mounted on the printing machine, using the pipe previously described. The tank pressure was set at a value of 4.0 bars.

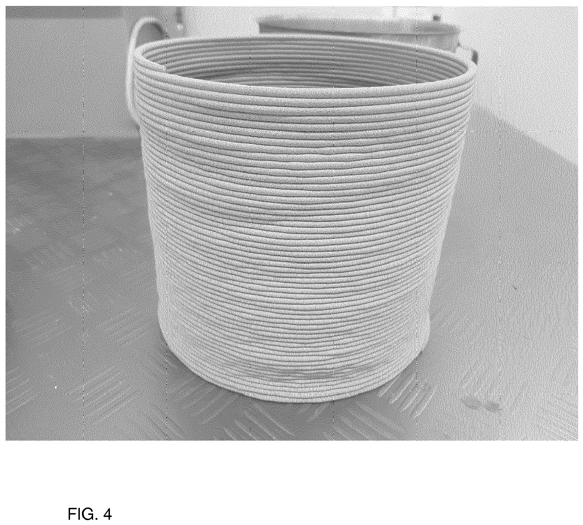

The mixture prepared as described above was extruded using a single-layer spiral printing path. The 3D model to be printed was a cylindrical element characterized by an internal diameter of 20 cm and a height of 20 cm. The model was successfully printed (as can be seen in Figure 4) in a single printing session, applying the following printing parameters:

Pressure at the cylindrical gas-pressurized supply tank: 4.0 bars;
Thread diameter imposed: 1.68 mm;
Height of the layer: 3.2 mm;
Printing rate: 10 mm/s;
Screw rotation rate: 180 revs/min;
Flight clearance: 0.5

Ratio between maximum diameter of the aggregate and the distance between screw and internal wall of the extruder: 0.7.

Example 2

A formulation of cementitious mixture having the composition indicated in the following Table 2 was prepared, using a Hobart mixer, according to the procedure described in Example 1.

Table 2: Formulation extruded according to Example 2.

| Component | Composition (weight %) |
|---|---|
| Cement I 52.5 R | 17.5% |
| GGBS | 17.5% |
| Calcareous filler | 33.9% |
| Silico-calcareous sand (0.00-0.200 mm) | 30.0% |
| Superfluidifying agent | 0.6% |
| Rheology modifier 1 | 0.3% |
| Rheology modifier 2 | 0.2% |
| Water/binder | 0.59 |
| Binder/aggregate | 1.17 |

The cement is of the type I 52.5 R coming from the Rezzato plant. The GGBS included in the formulation forms the latent hydraulic addition and is a granulated blast-furnace slag (GGBS: "ground granulated slag"), having a specific surface equal to 4,000 $cm^2$/g (according to the standard EN 196-6: 2010), supplied by the company ILVA. The calcareous filler is a high-purity filler, having a particle size which is such that 90% by weight of the filler passes through an 0.063 mm sieve, marketed by Omya Spa under the trade-name of Omyacarb 2-AV. The silico-calcareous aggregate is a fraction with a particle-size distribution ranging from 0.00 to 0.200 mm, with a particle size which is such that less than 2% by weight passes through an 0.063 mm sieve.

The superfluidifier is based on polycarboxylic ether, called Melflux 1641 F, and marketed by BASF. The rheology modifier 1 is a hydroxymethylethyl cellulose called *"Tylose MH 60004 P6"* marketed by ShinEtsu. The rheology modifier 2 is a starch modified with ether groups, marketed under the name of Aqualon ST2000 by Ashland. These three additives are all in solid form.

The water/binder ratio is equal to 0.59, whereas the binder/aggregate ratio is equal to 1.17.

At the end of the mixing, the cementitious mixture having the composition indicated in Table 2 was characterized by means of a Haake RotoVisco RV1 rheometer, using the method already described in Example 1. The viscosity of the cementitious mixture measured at a shear stress value of 0.01 s$^{-1}$ is equal to 11,620 Pa•s.

At the end of the mixing, the mortar was inserted in the cylindrical gas-pressurized supply tank which was connected to the extruder mounted on the printer, as described in Example 1. The tank pressure was set at a value of 4.0 bars.

The mixture prepared as described above was extruded using a single-layer spiral printing path. The 3D model to be printed was a cylindrical element characterized by an internal diameter of 20 cm and a height of 20 cm. The model was printed applying the same printing parameters indicated for Example 1, wherein, however, the value of the ratio between the maximum diameter of the aggregate and the distance between screw and inner wall of the extruder is equal to 0.4.

The model was correctly printed up to a height of 15 cm.

Even if the specific object provided by the 3D model was not completely printed with the formulation indicated in Table 2, the cementitious mixture of Table 2 is in any case suitable for being printed with this extrusion device in multiple printing sessions, rather than in a single session, as it is intrinsically characterized by an optimum compromise between rheological properties and buildability.

Example 3 (comparative example)

A formulation containing the composition indicated in Table 3 was prepared, using a Hobart mixer, according to the procedure described in Example 1.

Table 3: Formulation extruded according to Example 3.

| Component | Composition (weight %) |
|---|---|
| Cement I 52.5 R | 15.0% |
| GGBS | 15.0% |
| Calcareous filler | 35.2% |
| Silico-calcareous sand (0.00-0.200 mm) | 23.5% |
| Silico-calcareous sand (0.600-1.00 mm) | 10% |
| Superfluidifying agent | 0.5% |
| Rheology modifier 1 | 0.25% |
| Rheology modifier 2 | 0.2% |
| Shrinkage reducing agent | 0.35% |
| Water/binder | 0.57 |
| Binder/aggregate | 0.85 |

The cement is of the type I 52.5 R coming from the Rezzato plant. The GGBS included in the formulation forms the latent hydraulic addition and is a granulated blast-furnace slag (GGBS), having a specific surface equal to 4,000 cm$^2$/g (according to the standard EN 196-6: 2010), supplied by the company ILVA. The calcareous filler is a high-purity filler, having a particle size which is such that 90% by weight of the filler passes through an 0.063 mm sieve, marketed by Omya Spa under the trade-name of Omyacarb 2-AV. The silico-calcareous aggregates were added in two fractions, a first fraction with a particle-size distribution ranging from 0.00 to 0.200 mm, with a particle size which is such that less than 2% by weight passes through an 0.063 mm sieve, and a second fraction with a particle-size distribution ranging from 0.600 to 1.00 mm, extremes included.

The superfluidifier is based on polycarboxylic ether, called Melflux 1641 F, and marketed by BASF. The rheology modifier 1 is a hydroxymethylethyl cellulose called *"Tylose MH 60004 P6"* marketed by ShinEtsu. The rheology modifier 2 is a starch modified with ether groups, marketed under the name of Aqualon ST2000 by Ashland.

The shrinkage reducing agent (SRA), called SRA04, is marketed by Neuvendis; this is a mixture of glycols and special surfactants. The four additives are all in solid form.

The water/binder ratio is equal to 0.57, whereas the binder/aggregate ratio is equal to 0.85.

At the end of the mixing, the formulation indicated in Table 3 was characterized by means of a Haake RotoVisco RV1 rheometer, using the method already described in Example 1.

The viscosity value measured at a shear stress value of 0.01 $s^{-1}$ is equal to 21,000 Pa•s. At the end of the mixing, the mortar, characterized by a value of the ratio between the maximum diameter of the aggregate and the distance between screw and inner wall of the extruder equal to 2, was inserted in the cylindrical gas-pressurized supply tank which was connected to the extruder mounted on the printer, as described in Example 1. The tank pressure was set at a value of 4.0 bars.

The mixture prepared as described above was not processable.

Example 4 (comparative example)

A formulation containing the composition indicated in Table 4 was prepared, using a Hobart mixer, according to the procedure described in Example 1.

Table 4: Formulation extruded according to Example 4.

| Component | Composition (weight %) |
|---|---|
| Cement I 52.5 R | 43.0% |
| Calcareous filler | 11.0% |
| Silico-calcareous sand (0.20-0.350 mm) | 45.1% |
| Superfluidifying agent | 0.3% |
| Rheology modifier 1 | 0.3% |
| Rheology modifier 2 | 0.3% |
| Water/lbinder | 0.58 |
| Binder/aggregate | 0.95 |

The cement is of the type I 52.5 R coming from the Rezzato plant. The calcareous filler is a high-purity filler, having a particle size which is such that 90% by weight of the filler passes through an 0.063 mm sieve, marketed by Omya Spa under the trade-name of Omyacarb 2-AV. The silico-calcareous aggregate is a fraction with a particle-size distribution ranging from 0.200 to 0.350 mm.

The superfluidifier is based on polycarboxylic ether, called Melflux 1641 F, and marketed by BASF. The rheology modifier 1 is a hydroxymethylethyl cellulose called *"Tylose MH 60004 P6"* marketed by ShinEtsu. The rheology modifier 2 is a starch modified with ether groups, marketed under the name of Aqualon ST2000 by Ashland. These three additives are all in solid form.

The water/binder ratio is equal to 0.58, whereas the binder/aggregate ratio is equal to 0.95.

At the end of the mixing, the formulation indicated in Table 4 was characterized by means of a Haake RotoVisco RV1 rheometer, using the method already described in Example 1.

The viscosity value measured at a shear stress value of 0.01 $s^{-1}$ is equal to 813 Pa•s.

At the end of the mixing, the mortar, characterized by a value of the ratio between the maximum diameter of the aggregate and the distance between screw and inner wall of the extruder equal to 0.7, was inserted in the cylindrical gas-pressurized supply tank which was connected to the extruder mounted on the printer, as described in Example 1. The tank pressure was set at a value of 2.0 bars.

The mortar was processed in a 3D printing session, but it was not possible to obtain the expected number of layers.

The previous examples show that both the viscosity value and the maximum diameter of the aggregates are essential for the cementitious mixture for 3D printing according to the present invention.

Example 1, in fact, where the viscosity and the maximum diameter of the aggregates fall within the ranges provided by the present invention, allows a cementitious mixture for 3D printing to be obtained, which is extrudable and with an optimal buildability. This mixture therefore allows the desired product to be printed in a single printing session.

The cementitious mixture of Example 2 has a lower viscosity than the cementitious mixture of Example 1, included, however, within the range provided by the present invention, as also the maximum diameter of the aggregates. The cementitious mixture for 3D printing that is obtained is however extrudable and has a buildability that still allows the desired product to be printed, but with multiple printing sessions.

Although the cementitious mixture of comparative Example 3 has a viscosity value included within the range provided by the present invention, it has a maximum diameter of the aggregates outside the maximum range limit provided by the present invention. For this reason, the mixture is not processable. Although the cementitious mixture of comparative Example 4 has an aggregate having a maximum diameter included within the range provided by the present invention, it is characterized by a viscosity value outside the minimum viscosity limit provided by the present invention. It is consequently not able to sustain the number of layers provided by the model.

Bibliography:

[1] "Additive manufacturing - Turning manufacturing inside out", Peter Wray, American Ceramic Society Bulletin, Vol. 93, Nr. 3, 2014.
[2] ASTM Standard F2792 - 12a.
[3] S. Lim, R.A. Buswell, T.T. Le, S. Austin, A.G. Gibb, T. Thorpe, "Development in construction-scale additive manufacturing process", 2012, Automation Construction, 21:262268.
[4] R.A. Buswell, R.C. Soar, A.G.F. Gibb, A. Thorpe, "Freeform construction: mega-scale rapid manufacturing for construction", 16, 2007, Automation in Construction, pages 224-231.
[5] T.T. Le, S.A. Austin, S. Lim, R.A. Buswell, A.G.F. Gibb, T. Thorpe, "Mix design and fresh properties for high-performance printing concrete", 45, 2012, Materials and Structures, pages 1221-1232.
[6] B. Khoshnevis, D. Hwang, K.T. Yao, Z. Yeh, "Mega-Scale fabrication by contour crafting", Industrial and Systems Engineering international journal, Vol. 1, No. 3, 301-320, 2006.
[7] D. Hwang, B. Khoshnevis, "Concrete wall fabrication by contour crafting", proceedings of the 21st International Symposium on Automation and Robotics in Construction (ISARC 2004), Jeju, South Korea, 2004.
[8] B. Khoshnevis, "Automated construction by contour crafting-related robotics and information technologies", Automation in Construction, Vol.13, No. 1, 5-19., 2004.
[9] Frankson, Lies, "Printing your dream house: innovations in construction", IMIESA, Vol. 40, No. 4, 33-34, 2015.
[10] Hüsken G., Brouwers H.J.H, "On the early-age behavior of zero-slump concrete", Cement and Concrete Research 42 (2012) 501-510.

## Claims

1. A cementitious mixture for a 3D printer which comprises a) cement or hydraulic binder, b) latent hydraulic addition, c) filler, d) aggregates, e) additives, f) water, said mixture being **characterized in that**
   component c) i.e. the filler, selected from calcareous, silica or silico-calcareous fillers, preferably calcareous fillers, alone or in a mixture, has a particle size which is such that 90% by weight of the filler passes through an 0.063 mm sieve;
   component d) is present in a quantity ranging from 10% to 80% by weight, preferably from 25% to 50% by weight, with respect to the total weight of the cementitious mixture, and is composed of calcareous, silica or silico-calcareous aggregates, alone or mixed with each other, having a particle size with a maximum diameter lower than 1 mm, said component d) being composed of one or more fractions having a particle size greater than 0.2 mm and/or a fraction having a particle size with a diameter less than or equal to 0.2 mm and such that less than 2% by weight passes through an 0.063 mm sieve;
   component e) comprises superfluidifying additives, rheology modifying agents, shrinkage reducing agents and mixtures thereof,
   said cementitious mixture being **characterized by** a viscosity value ranging from 4,000 Pa·s to 35,000 Pa·s, measured at a shear rate of 0.01 s$^{-1}$, and at the temperature of 20°C.

2. The cementitious mixture according to claim 1, comprising:

   a) from 10% to 70% by weight of hydraulic binder or cement, preferably selected from Portland cement, sulfoaluminate cement and/or aluminous cement and/or quick-setting natural cement, alone or mixed with each other;
   b) from 0.0% to 25% by weight, preferably from 0.5% to 20% by weight, of a natural or artificial hydraulic addition, preferably granulated blast-furnace slag, having a specific surface ranging from 3,500 cm$^2$/g to 6,500 cm$^2$/g,

preferably from 4,000 cm$^2$/g to 5,000 cm$^2$/g, measured with the Blaine method according to EN 196-6:2010;

c) from 10% to 50% by weight, preferably from 15% to 40% by weight, of a filler, selected from calcareous, silica or silico-calcareous fillers, alone or mixed with each other, having a particles size which is such that 90% by weight of the filler passes through an 0.063 mm sieve;

d) from 10% to 80% by weight, preferably from 25% to 50% by weight, of calcareous, silica or silico-calcareous aggregates, alone or mixed with each other, having a particle size with a maximum diameter lower than 1 mm, said component d) being composed of one or more fractions having a particle size greater than 0.2 mm and/or a fraction having a particle size with a diameter less than or equal to 0.2 mm and such that less than 2% by weight passes through an 0.063 mm sieve;

e) from 0.01% to 1.5% by weight, preferably from 0.2% to 1.0% by weight, of a superfluidifying additive selected from superfluidifying acrylic-based polycarboxylates, lignosulfonates, naphthalene sulfonates, melamine or vinyl compounds, more preferably polycarboxylic ethers; from 0.01% to 5.0% by weight, preferably from 0.10% to 0.50% by weight, of a rheology modifying additive, preferably cellulose, more preferably hydroxymethylethyl cellulose; from 0.01% to 2.0% by weight, preferably from 0.1% to 1.0% by weight, of modified starch; from 0.0% to 1.0% by weight, preferably from 0.3% to 0.6% by weight, of a shrinkage reducing agent;

wherein the binder/aggregate weight ratio ranges from 0.5 to 2.0, preferably from 0.62 to 1.36 and said mixture has a viscosity value ranging from 4,000 Pa·s to 35,000 Pa·s, measured at a shear rate of 0.01 s$^{-1}$ and at the temperature of 20°C.

3. The cementitious mixture according to one of the previous claims, wherein the water/binder weight ratio ranges from 0.25 to 0.8, preferably from 0.4 to 0.6.

4. The cementitious mixture according to one of the previous claims, consisting of:

a) from 10% to 70% by weight of hydraulic binder or cement, selected from CEM I 52.5 R or CEM I 52.5 N, preferably CEM I 52.5 R;

b) from 0.5% to 20% by weight of granulated blast-furnace slag, having a specific surface ranging from 4,000 cm$^2$/g to 5,000 cm$^2$/g, measured with the Blaine method according to EN 196-6:2010;

c) from 15% to 40% by weight of a calcareous filler, alone or in a mixture, having a particles size which is such that 90% by weight of the filler passes through an 0.063 mm sieve;

d) from 25% to 50% by weight of calcareous, silica or silico-calcareous aggregates, alone or in a mixture, having a particle size with a maximum diameter lower than 1 mm, said component d) being composed of one or more fractions having a particle size greater than 0.2 mm and/or a fraction having a particle size with a diameter less than or equal to 0.2 mm and such that less than 2% by weight passes through an 0.063 mm sieve;

e) from 0.2% to 1.0% by weight of a superfluidifying additive based on polycarboxylic ether; from 0.10% to 0.50% by weight of a rheology modifying additive which is hydroxymethylethyl cellulose; from 0.1% to 1.0% by weight of modified starch; from 0.3% to 0.6% by weight of a shrinkage reducing agent;

wherein the binder/aggregate weight ratio ranges from 0.62 to 1.36 and said cementitious mixture has a viscosity value ranging from 4,000 Pa·s to 35,000 Pa·s, measured at a shear rate of 0.01 s$^{-1}$ and at the temperature of 20°C.

5. The cementitious mixture according to one or more of the previous claims, wherein component a) of the mixture is selected from CEM I 52.5 R or CEM I 52.5 N, preferably CEM I 52.5 R.

6. The cementitious mixture according to one or more of the previous claims, wherein component b) of the mixture is a granulated blast-furnace slag having a specific surface ranging from 3,500 cm$^2$/g to 6,500 cm$^2$/g, preferably from 4,000 cm$^2$/g to 5,000 cm$^2$/g, measured with the Blaine method according to EN 196-6:2010.

7. Use of a cementitious mixture according to one or more of the previous claims 1-6, as extrusion material in a 3D printer.

8. A finished product having a complex geometry obtained by means of 3D printing with an apparatus fed with a cementitious mixture according to any of the claims from 1 to 6.

**Patentansprüche**

1. Zementhaltige Mischung für einen 3D-Drucker, umfassend a) Zement oder hydraulische Bindemittel, b) latent hydraulische Zusatzstoffe, c) Füllstoffe, d) Aggregate, e) Additive, f) Wasser, wobei die Mischung **dadurch gekennzeichnet ist, dass**

die Komponente c), d.h. der Füllstoff ausgewählt aus kalkhaltigen Siliziumdioxid- oder Siliziumkalkhaltigen Füllstoffen, vorzugsweise kalkhaltigen Füllstoffen, allein oder miteinander gemischt, eine solche Partikelgröße aufweist, dass 90 Gew.-% des Füllstoffs durch ein 0,063 mm-Sieb hindurchgehen;

die Komponente d) in einer Menge im Bereich von 10 bis 80 Gew.-%, vorzugsweise von 25 bis 50 Gew.-%, bezogen auf das Gesamtgewicht der zementhaltigen Mischung vorliegt, und aus kalkhaltigen Siliciumdioxid- oder Siliziumkalkhaltigen Füllstoffen, allein oder miteinander gemischt, besteht, aufweisend eine Partikelgröße mit einem maximalen Durchmesser von weniger als 1 mm, wobei die Komponente d) aus einer oder mehreren Fraktionen aufweisend eine Partikelgröße von mehr als 0,2 mm und/oder einer Fraktion aufweisend eine Partikelgröße mit einem Durchmesser von weniger oder gleich 0,2 mm besteht, so dass weniger als 2 Gew.-% durch ein 0,063 mm-Sieb hindurchgehen;

die Komponente e) superfluidisierende Additive, Rheologiemodifizierungsmittel, Schrumpfungsreduktionsmittel und Gemische hiervon umfasst,

wobei das zementhaltige Gemisch durch einen Viskositätswert im Bereich von 4.000 Pa·s bis 35.000 Pa·s gekennzeichnet ist, bei einer Schergeschwindigkeit von 0,01s$^{-1}$ und bei einer Temperatur von 20°C gemessen.

2. Zementhaltige Mischung nach Anspruch 1, umfassend:

a) von 10 bis 70 Gew.-% hydraulisches Bindemittel oder Zement, vorzugsweise ausgewählt aus Portlandzement, Sulfoaluminatzement und/oder aluminiumhaltigem Zement und/oder schnell abbindendem Naturzement, allein oder miteinander gemischt;

b) von 0.0 bis 25 Gew.-%, vorzugsweise von 0.5 bis 20 Gew.-%, eines natürlichen oder künstlichen hydraulischen Zusatzes, vorzugsweise granulierter Hochofenschlacke, aufweisend eine spezifische Oberfläche im Bereich von 3.500 cm$^2$/g bis 6.500 cm$^2$/g, vorzugsweise 4.000 cm$^2$/g bis 5.000 cm$^2$/g, mit der Blaine-Methode gemäß EN 196-6: 2010 gemessen;

c) von 10 bis 50 Gew.-%, vorzugsweise von 15 bis 40 Gew.-% eines Füllstoffs, ausgewählt aus kalkhaltigen Siliciumdioxid- oder Siliziumkalkhaltigen Füllstoffen, allein oder miteinander gemischt, und eine solche Partikelgröße aufweisend, dass 90 Gew.-% des Füllstoffs durch ein 0,063 mm-Sieb hindurchgehen;

d) von 10 bis 80 Gew.-%, vorzugsweise von 25 bis 50 Gew.-% aus kalkhaltigen Siliciumdioxid- oder Siliziumkalkhaltigen Aggregaten, allein oder miteinander gemischt, aufweisend eine Partikelgröße mit einem maximalen Durchmesser von weniger als 1 mm, wobei die Komponente d) aus einer oder mehreren Fraktionen aufweisend eine Partikelgröße von mehr als 0,2 mm und/oder einer Fraktion aufweisend eine Partikelgröße mit einem Durchmesser von weniger oder gleich 0,2 mm besteht, so dass weniger als 2 Gew.-% durch ein 0,063 mm-Sieb hindurchgehen;

e) von 0.01 bis 1.5 Gew.-%, vorzugsweise von 0.2 bis 1.0 Gew.-% eines superfluidisierenden Additivs, ausgewählt aus superfluidisierenden acrylbasierten Polycarboxylaten, Lignosulfonaten, Naphthalinsulfonaten, Melamin- oder Vinylverbindungen, besonders bevorzugt Polycarboxylethem; von 0.01 bis 5.0 Gew.-%, vorzugsweise von 0.10 bis 0.50 Gew.-% eines rheologiemodifizierenden Additivs, vorzugsweise Cellulose, besonders bevorzugt Hydroxymethylethylcellulose; von 0.01 bis 2.0 Gew.-%, vorzugsweise von 0.1 bis 1.0 Gew.-% modifizierter Stärke; von 0.0 bis 1.0 Gew.-%, vorzugsweise von 0.3 bis 0.6 Gew.-% eines Schrumpfungsreduktionsmittels,

wobei das Gewichtsverhältnis von Bindemittel zu Aggregat im Bereich von 0,5 bis 2,0, vorzugsweise von 0,62 bis 1,36 liegt und die Mischung einen Viskositätswert im Bereich von 4.000 Pa·s bis 35.000 Pa·s aufweist, bei einer Schergeschwindigkeit von 0.01 s$^{-1}$ und bei einer Temperatur von 20°C gemessen.

3. Zementhaltige Mischung nach einem der vorhergehenden Ansprüche, wobei das Gewichtsverhältnis von Wasser zu Bindemittel im Bereich von 0,25 bis 0,8, vorzugsweise im Bereich von 0,4 bis 0,6 liegt.

4. Zementhaltige Mischung nach einem der vorhergehenden Ansprüche, bestehend aus:

a) von 10 bis 70 Gew.-% hydraulischem Bindemittel oder Zement, ausgewählt aus CEM I 52,5 R oder CEM I 52,5 N, vorzugsweise CEM I 52,5 R;

b) von 0.5 bis 20 Gew.-% granulierter Hochofenschlacke aufweisend eine spezifische Oberfläche im Bereich von 4,000 cm$^2$/g bis 5,000 cm$^2$/g, mit der Blaine-Methode gemäß EN 196-6:2010 gemessen;

c) von 15 bis 40 Gew.-% eines kalkhaltigen Füllstoffs, allein oder miteinander gemischt, eine solche Partikelgröße aufweisend, dass 90 Gew.-% des Füllstoffs durch ein 0.063 mm-Sieb hindurchgehen;

d) von 25 bis 50 Gew.-% kalkhaltigen Siliciumdioxid- oder Siliziumkalkhaltigen Aggregaten, allein oder miteinander gemischt, aufweisend eine Partikelgröße mit einem maximalen Durchmesser von weniger als 1 mm, wobei die Komponente d) aus einer oder mehreren Fraktionen besteht aufweisend eine Partikelgröße von mehr als 0,2 mm und/oder einer Fraktion aufweisend eine Partikelgröße mit einem Durchmesser von weniger als oder gleich 0,2 mm, so dass weniger als 2 Gew.-% durch ein 0.063 mm-Sieb hindurchgehen;

e) von 0.2 bis 1.0 Gew.-% eines superfluidisierenden Additivs auf Basis von Polycarbonsäureether; von 0.10 Gew.-% bis 0.50 Gew.-% eines rheologiemodifizierenden Additivs, das Hydroxymethylethylcellulose ist; von 0.1 bis 1.0 Gew.-% modifizierter Stärke; von 0.3 Gew.-% bis 0.6 Gew.-% eines Schrumpfungsreduktionsmittels;

wobei das Gewichtsverhältnis von Bindemittel zu Aggregat im Bereich von 0,62 bis 1,36 liegt und die zementhaltige Mischung einen Viskositätswert im Bereich von 4.000 Pa·s bis 35.000 Pa·s aufweist, bei einer Schergeschwindigkeit von 0.01 s$^{-1}$ und bei einer Temperatur von 20°C gemessen.

5. Zementhaltige Mischung nach einem oder mehreren der vorhergehenden Ansprüche, wobei die Komponente a) der Mischung ausgewählt ist aus CEM I 52,5 R oder CEM I 52,5 N, vorzugsweise CEM I 52,5 R.

6. Zementhaltige Mischung nach einem oder mehreren der vorhergehenden Ansprüche, wobei die Komponente b) der Mischung eine granulierte Hochofenschlacke mit einer spezifischen Oberfläche im Bereich von 3,500 cm$^2$/g bis 6,500 cm$^2$/g ist, vorzugsweise von 4,000 cm$^2$/g bis 5,000 cm$^2$/g, mit der Blaine-Methode gemäß EN 196-6: 2010 gemessen.

7. Verwendung einer zementhaltigen Mischung nach einem oder mehreren der vorhergehenden Ansprüche von 1 bis 6 als Extrusionsmaterial in einem 3D-Drucker.

8. Ein Fertigprodukt mit einer komplexen Geometrie, das im 3D-Druckverfahren mit einem Gerät hergestellt ist, dem eine zementhaltige Mischung zugeführt wird gemäß einem oder mehreren der Ansprüche von 1 bis 6.

## Revendications

1. Un mélange cimentaire pour une imprimante 3D qui comprend a) du ciment ou un liant hydraulique, b) une addition hydraulique latente, c) une charge, d) des agrégats, e) des additifs, f) de l'eau, ledit mélange étant **caractérisé en ce que**

le composant c), c.-à-d. la charge, sélectionnée parmi des charges calcaires, de silice ou silico-calcaires, préférablement des charges calcaires, seules ou en mélange, a une taille de particules qui est telle que 90 % en poids de la charge passe à travers un tamis de 0,063 mm ;

le composant d) est présent en une quantité allant de 10 % à 80 % en poids, préférablement de 25 % à 50 % en poids, par rapport au poids total du mélange cimentaire, et est composé d'agrégats calcaires, de silice ou silico-calcaires, seuls ou mélangés les uns aux autres, ayant une taille de particules d'un diamètre maximum inférieur à 1 mm, ledit composant d) étant composé d'une ou de plusieurs fractions ayant une taille de particules supérieure à 0,2 mm et/ou une fraction ayant une taille de particules d'un diamètre inférieur ou égal à 0,2 mm et de telle sorte que moins de 2 % en poids passe à travers un tamis de 0,063 mm ;

le composant e) comprend des additifs superfluidifiants, des agents modificateurs de rhéologie, des agents réducteurs de retrait et des mélanges de ceux-ci, ledit mélange cimentaire étant **caractérisé par** une valeur de viscosité allant de 4 000 Pa·s à 35 000 Pa·s, mesurée à une vitesse de cisaillement de 0,01 s$^{-1}$, et à la température de 20 °C.

2. Le mélange cimentaire selon la revendication 1, comprenant :

a) de 10 % à 70 % en poids de liant hydraulique ou de ciment, préférablement sélectionné parmi du ciment Portland, du ciment sulfoaluminate et/ou du ciment alumineux et/ou du ciment naturel à prise rapide, seuls ou mélangés les uns aux autres ;

b) de 0,0 % à 25 % en poids, préférablement de 0,5 % à 20 % en poids, d'une addition hydraulique naturelle ou artificielle, préférablement de laitier de haut fourneau granulé, ayant une surface spécifique allant de 3 500 cm$^2$/g à 6 500 cm$^2$/g, préférablement de 4 000 cm$^2$/g à 5 000 cm$^2$/g, mesurée avec la méthode de Blaine selon EN 196-6:2010 ;

c) de 10 % à 50 % en poids, préférablement de 15 % à 40 % en poids, d'une charge, sélectionnée parmi des charges calcaires, de silice ou silico-calcaires, seules ou mélangées les unes aux autres, ayant une taille de particules qui est telle que 90 % en poids de la charge passe à travers un tamis de 0,063 mm ;

d) de 10 % à 80 % en poids, préférablement de 25 % à 50 % en poids, d'agrégats calcaires, de silice ou silico-calcaires, seuls ou mélangés les uns aux autres, ayant une taille de particules d'un diamètre maximum inférieur à 1 mm, ledit composant d) étant composé d'une ou de plusieurs fractions ayant une taille de particules supérieure à 0,2 mm et/ou une fraction ayant une taille de particules d'un diamètre inférieur ou égal à 0,2 mm et de telle sorte que moins de 2 % en poids passe à travers un tamis de 0,063 mm ;

e) de 0,01 % à 1,5 % en poids, préférablement de 0,2 % à 1,0 % en poids, d'un additif superfluidifiant sélectionné parmi les polycarboxylates à base d'acrylique superfluidifiant, les lignosulfonates, les sulfonates de naphtalène, les composés de mélamine ou de vinyle, plus préférablement les éthers polycarboxyliques ; de 0,01 % à 5,0 % en poids, préférablement de 0,10 % à 0,50 % en poids, d'un additif modificateur de rhéologie, préférablement de la cellulose, plus préférablement de la cellulose d'hydroxyméthyléthyle ; de 0,01 % à 2,0 % en poids, préférablement de 0,1 % à 1,0 % en poids, d'amidon modifié ; de 0,0 % à 1,0 % en poids, préférablement de 0,3 % à 0,6 % en poids, d'un agent réducteur de retrait ;

dans lequel le rapport pondéral liant/agrégat va de 0,5 à 2,0, préférablement de 0,62 à 1,36 et ledit mélange ayant une valeur de viscosité allant de 4 000 Pa·s à 35 000 Pa·s, mesurée à une vitesse de cisaillement de 0,01 s$^{-1}$ et à la température de 20 °C.

3. Le mélange cimentaire selon l'une des revendications précédentes, dans lequel le rapport pondéral eau/liant va de 0,25 à 0,8, préférablement de 0,4 à 0,6.

4. Le mélange cimentaire selon l'une des revendications précédentes, constitué de :

a) de 10 % à 70 % en poids de liant hydraulique ou de ciment, sélectionné parmi CEM I 52,5 R ou CEM I 52,5 N, préférablement CEM I 52,5 R ;

b) de 0,5 % à 20 % en poids de laitier de haut fourneau granulé, ayant une surface spécifique allant de 4 000 cm$^2$/g à 5 000 cm$^2$/g, mesurée avec la méthode de Blaine selon EN 196-6:2010 ;

c) de 15 % à 40 % en poids d'une charge calcaire, seule ou en mélange, ayant une taille de particules qui est telle que 90 % en poids de la charge passe à travers un tamis de 0,063 mm ;

d) de 25 % à 50 % en poids d'agrégats calcaires, de silice ou silico-calcaires, seuls ou en mélange, ayant une taille de particules d'un diamètre maximum inférieur à 1 mm, ledit composant d) étant composé d'une ou de plusieurs fractions ayant une taille de particules supérieure à 0,2 mm et/ou une fraction ayant une taille de particules d'un diamètre inférieur ou égal à 0,2 mm et de telle sorte que moins de 2 % en poids passe à travers un tamis de 0,063 mm ;

e) de 0,2 % à 1,0 % en poids d'un additif superfluidifiant à base d'éther polycarboxylique ; de 0,10 % à 0,50 % en poids d'un additif modificateur de rhéologie qui est de la cellulose d'hydroxyméthyléthyle ; de 0,1 % à 1,0 % en poids d'amidon modifié ; de 0,3 % à 0,6 % en poids d'un agent réducteur de retrait ;

dans lequel le rapport pondéral liant/agrégat va de 0,62 à 1,36 et ledit mélange cimentaire a une valeur de viscosité allant de 4 000 Pa·s à 35 000 Pa·s, mesurée à une vitesse de cisaillement de 0,01 s$^{-1}$ et à la température de 20 °C.

5. Le mélange cimentaire selon une ou plusieurs des revendications précédentes, dans lequel le composant a) du mélange est sélectionné parmi CEM I 52,5 R ou CEM I 52,5 N, préférablement CEM I 52,5 R.

6. Le mélange cimentaire selon une ou plusieurs des revendications précédentes, dans lequel le composant b) du mélange est un laitier de haut fourneau granulé ayant une surface spécifique allant de 3 500 cm$^2$/g à 6 500 cm$^2$/g, préférablement de 4 000 cm$^2$/g à 5 000 cm$^2$/g, mesurée avec la méthode de Blaine selon EN 196-6:2010.

7. Utilisation d'un mélange cimentaire selon une ou plusieurs des revendications précédentes 1 à 6, en tant que matériau d'extrusion dans une imprimante 3D.

8. Un produit fini ayant une géométrie complexe obtenue au moyen d'une impression 3D avec un appareil alimenté avec un mélange cimentaire selon l'une quelconque des revendications 1 à 6.

EP 3 421 201 B1

FIG. 1

FIG. 2

17

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104310918
- CN 201510838044 A
- WO 2017050421 A1
- US 20140252672 A1
- US 7641461 B2
- US 7837378 B2
- US 7878789 B2
- US 7753642 B2

**Non-patent literature cited in the description**

- **LE, T.T. et al.** Mix design and fresh properties for high-performance printing concrete. *Materials and Structures,* 2012, vol. 45, 1221-1232
- **PETER WRAY.** Additive manufacturing - Turning manufacturing inside out. *American Ceramic Society Bulletin,* 2014, vol. 93 (3
- **S. LIM ; R.A. BUSWELL ; T.T. LE ; S. AUSTIN ; A.G. GIBB ; T. THORPE.** Development in construction-scale additive manufacturing process. *Automation Construction,* 2012, vol. 21, 262268
- **R.A. BUSWELL ; R.C. SOAR ; A.G.F. GIBB ; A. THORPE.** Freeform construction: mega-scale rapid manufacturing for construction. *Automation in Construction,* 2007, vol. 16, 224-231
- **T.T. LE ; S.A. AUSTIN ; S. LIM ; R.A. BUSWELL ; A.G.F. GIBB ; T. THORPE.** Mix design and fresh properties for high-performance printing concrete. *Materials and Structures,* 2012, vol. 45, 1221-1232
- **B. KHOSHNEVIS ; D. HWANG ; K.T. YAO ; Z. YEH.** Mega-Scale fabrication by contour crafting. *Industrial and Systems Engineering international journal,* 2006, vol. 1 (3), 301-320
- **D. HWANG ; B. KHOSHNEVIS.** Concrete wall fabrication by contour crafting. *proceedings of the 21st International Symposium on Automation and Robotics in Construction (ISARC 2004),* 2004
- **B. KHOSHNEVIS.** Automated construction by contour crafting-related robotics and information technologies. *Automation in Construction,* 2004, vol. 13 (1), 5-19
- **FRANKSON ; LIES.** Printing your dream house: innovations in construction. *IMIESA,* 2015, vol. 40 (4), 33-34
- **HÜSKEN G. ; BROUWERS H.J.H.** On the early-age behavior of zero-slump concrete. *Cement and Concrete Research,* 2012, vol. 42, 501-510